(19) Europäisches Patentamt
European Patent Office
Office européen des brevets

(11) Veröffentlichungsnummer : **0 058 378**
**B1**

# (12) EUROPÄISCHE PATENTSCHRIFT

(45) Veröffentlichungstag der Patentschrift : **30.01.85**

(51) Int. Cl.⁴ : **C 08 L 25/00**, C 08 L 71/04

(21) Anmeldenummer : **82100934.7**

(22) Anmeldetag : **09.02.82**

## (54) Selbstverlöschende thermoplastische Formmassen.

(30) Priorität : **18.02.81 DE 3105946**

(43) Veröffentlichungstag der Anmeldung : **25.08.82 Patentblatt 82/34**

(45) Bekanntmachung des Hinweises auf die Patenterteilung : **30.01.85 Patentblatt 85/05**

(84) Benannte Vertragsstaaten : **BE DE FR GB IT NL**

(56) Entgegenhaltungen : **US-A- 4 128 604**

(73) Patentinhaber : **BASF Aktiengesellschaft**
**Carl-Bosch-Strasse 38**
**D-6700 Ludwigshafen (DE)**

(72) Erfinder : **Brandstetter, Franz, Dr.**
**Ritterbuechel 45**
**D-6730 Neustadt (DE)**
Erfinder : **Muench, Volker, Dr.**
**Luitpoldstrasse 114**
**D-6700 Ludwigshafen (DE)**
Erfinder : **Naarmann, Herbert, Dr.**
**Haardtblick 15**
**D-6719 Wattenheim (DE)**
Erfinder : **Priebe, Edmund, Dr.**
**Bensheimer Ring 7A**
**D-6710 Frankenthal (DE)**

**EP 0 058 378 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft selbstverlöschende thermoplastische Formmassen, enthaltend

A) 70 bis 10 Gewichtsteile eines schlagzäh modifizierten Polymerisates einer vinylaromatischen Verbindung, insbesondere eines Styrolpolymerisates,
B) 30 bis 90 Gewichtsteile eines Polyphenylenethers,
C) 1 bis 20 Gewichtsteile eines Flammschutzzusatzes, sowie
D) — gegebenenfalls — übliche Zusatzstoffe in wirksamen Mengen,

die nach Entzünding mit einer heißen Flamme in wenigen Sekunden verlöschen und nicht brennend abtropfen.

Thermoplastische Formmassen, die sich zur Herstellung von Formteilen eignen, die schlagzäh modifizierte Styrolpolymerisate und Polyphenylenether enthalten und selbstverlöschend sind, sind z. B. aus der DE-AS 20 37 510 und der US-PS 3 809 729 bekannt. Diese Formmassen enthalten zur Flammfestausrüstung sowohl eine aromatische Phosphorkomponente als auch eine aromatische Halogenverbindung. Es können aber auch ohne Zusatz von Halogenverbindungen unter Verwendung von aromatischen Phosphaten und cyclischen Phosphonaten bzw. Phosphaten, wie beispielsweise in den US-PS 3 883 613, 4 154 775 und der DE-OS 28 36 771 beschrieben, selbstverlöschende Formmassen erhalten werden. Formteile, die aus diesen Formmassen erhalten werden, besitzen zwar eine bei vielen Anwendungsbeispielen gewünschte matte Oberfläche. Hierbei handelt es sich aber um eine inhomogene, stark von den Verarbeitungsbedingungen abhängige Mattigkeit.

Der vorliegenden Erfindung lag daher die Aufgabe zugrunde, thermoplastische Formmassen auf der Basis von schlagzäh modifizierten Polymerisaten einer vinylaromatischen Verbindung und Polyphenylenethern zu schaffen, die nach Entzündung mit einer heißen Flamme in wenigen Sekunden verlöschen, nicht brennend abtropfen und zu Formteilen mit einer homogenen matten Oberfläche, deren Aussehen weitgehend unabhängig von den Verarbeitungsbedingungen ist, führen.

Diese Aufgabe wird erfindungsgemäß gelöst durch Formmassen, die aus einem schlagzäh modifizierten Polymerisat einer vinylaromatischen Verbindung, Polyphenylenethern und einem Flammschutzzusatz bestehen, wobei das schlagzäh modifizierte Polymerisat der vinylaromatischen Verbindung einen Weichkomponentengehalt von 20 bis 60 Gew.-% hat und 98 bis 10 Gew.-% der Weichkomponente eine mittlere Teilchengröße von $\leq 1{,}5$ µm und 2 bis 90 Gew.-% eine mittlere Teilchengröße von größer 3 µm aufweisen.

Gegenstand der Erfindung sind dementsprechend selbstverlöschende theroplastische Formmassen, enthaltend

A) 70 bis 10 Gewichtsteile wenigstens eines Polymerisates einer monovinylaromatischen Verbindung, insbesondere eines Styrolpolymerisats, und vor allem eines schlagzäh modifizierten Styrolpolymerisats,
B) 30 bis 90, insbesondere 40 bis 70 Gewichtsteile eines Polyphenylenethers,
C) 1 bis 20, insbesondere 2 bis 12 Gewichtsteile eines Flammschutzzusatzes, sowie
D) — gegebenenfalls — übliche Zusatzstoffe in wirksamen Mengen.

Die erfindungsgemäßen Formmassen sind dadurch gekennzeichnet, daß das schlagzäh modifizierte Polymerisat der vinylaromatischen Verbindung einen Weichkomponentengehalt von 20 bis 60 Gew.-% hat und 98 bis 10, vorzugsweise 90 bis 20 Gew.-%, der Weichkomponente eine mittlere Teilchengröße von $\leq 1{,}5$ µm, vorzugsweise von 0,3 bis 1,2 µm, und 2 bis 90 Gew.-% vorzugsweise 10 bis 80 Gew.-%, eine mittlere Teilchengröße von $> 3$ µm, vorzugsweise von 4 bis 10 µm aufweisen.

Unter Formmassen sollen ungeformte Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Die Herstellung der in den Formmassen enthaltenen schlagzäh modifizierten Polymerisate kann nach beliebigen Verfahren erfolgen, sofern dafür gesorgt ist, daß die obengenannten Teilchengrößenverteilungen eintreten. Man kann aber auch schlagzäh modifizierte Polymerisate, deren Weichkomponenten unterschiedliche Teilchengrößen haben, miteinander mischen. Die in den erfindungsgemäßen Formmassen enthaltenen Polymerisate können beispielsweise durch Mischen von 80 Gewichtsteilen eines Polymerisates mit einer mittleren Teilchengröße von 0,5 Mikron mit 10 Gewichtsteilen eines Polymerisates mit einer mittleren Teilchengröße von 6 Mikron oder beispielsweise durch Mischen von 61 Gewichtsteilen eines Polymerisates mit einer mittleren Teilchengräße von 1 Mikron mit 4 Gewichtsteilen eines Polymerisates mit einer mittleren Teilchengröße von 6 Mikron erhalten werden.

Die meist angewandten Verfahren zur Herstellung schlagzäh modifizierter Polymerisate von vinylaromatischen Verbindungen (Komponente A) sind die Polymerisation in Masse oder Lösung, wie es beispielsweise in der US-PS 2 694 692 beschrieben ist und Verfahren zur Masse-Suspensionspolymerisation, wie sie beispielsweise in der US-PS 2 862 906 beschrieben sind.

Als monovinylaromatische Verbindungen kommen dabei insbesondere Styrol in Betracht, ferner die kern- oder seitenkettenalkylierten Styrole. Vorzugsweise wird jedoch Styrol allein verwendet.

Als Kautschuke werden die üblicherweise für die Schlagzähmodifizierung von Styrolpolymerisaten gebräuchlichen natürlichen oder synthetischen Kautschuke eingesetzt. Geeignete Kautschuke im Sinne der Erfindung sind neben Naturkautschuk z. B. Polybutadien, Polyisopren und Mischpolymerisate des Butadiens und/oder Isoprens mit Styrol und anderen Comonomeren, die eine Glastemperatur unter – 20 °C besitzen. Besonders eignen sich Butadien-Polymerisate mit einem 1,4-cis-Gehalt der zwischen 25 und 98 liegt.

Die Herstellung der schlagzäh modifizierten Polymerisate mit dem erfindungsgemäßen Eigenschaftsbild geschieht durch Polymerisation der monovinylaromatischen Verbindungen in Gegenwart des Kautschuks. Die Polymerisation erfolgt, wie erwähnt, dabei in der Regel in an sich bekannter Weise in Masse, in Lösung oder wäßriger Dispersion, wobei zunächst der Kautschuk in den polymerisierbaren Monomeren gelöst und diese Ausgangslösung polymerisiert wird.

Bei der Lösungs-Polymerisation können dieser Ausgangslösung noch bis zu maximal 50 Gew.-%, bezogen auf die eingesetzten monovinylaromatischen Verbindungen, eines indifferenten Verdünnungsmittels zugesetzt werden. Als indifferente Verdünnungsmittel sind beispielsweise aromatische Kohlenwasserstoffe oder Gemische von aromatischen Kohlenwasserstoffen geeignet. Bevorzugt werden dabei Toluol, Ethylbenzol, die Xylole oder Gemische dieser Verbindungen.

Bei der Polymerisation in wäßriger Dispersion wird im allgemeinen auf den Zusatz von Lösungsmitteln versichtet ; eine besonders günstige Ausführungsform besteht darin, die Lösung des Kautschuks in den Monomeren bis zu einem Umsatz von etwa 45 % in Masse unter Einwirkung von Scherkräften vorzupolymerisieren, diese Reaktionsmasse dann in Wasser zu suspendieren und anschließend auszupolymerisieren. Im allgemeinen wird dieses Verfahren unter zugabe öllöslicher, in Radikale zerfallender Initiatoren wie Benzoylperoxid, Dicumylperoxid, Di-tert-butylperoxid, Azo-diisobutyronitril u. ä. oder Kombinationen davon ausgelöst, doch kann die Vorpolymerisation auch thermisch gestartet werden. Als Suspendiermittel dienen bekanntlich wasserlöschliche, hochmolekulare Verbindungen wie Methylcellulose, Oxypropylcellulose, Polyvinylalkohol, teilverseifte Polyvinylacetate usw. oder anorganische Dispergiermittel, z. B. von Bariumsulfat. Die Suspendiermittel werden im allgemeinen in Mengen von 0,1 bis 5 Gew.-%, bezogen auf die organische Phase, eingesetzt.

Bei der Polymerisation in Masse oder Lösung wird in der Regel in einem Temperaturbereich zwischen 50 und 250 °C, vorzugsweise 100 bis 200 °C, polymerisiert. Der Polymerisationsansatz muß dabei mindestens im ersten Abschnitt der Polymerisation, d. h. bis zu Umsätzen der monovinylaromatischen Verbindungen gleich oder kleiner 45 Gew.-% gut gerührt werden. Alle diese Polymerisationsverfahren sind hinreichend bekannt und in Einzelheiten in der Literatur beschrieben. Eine zusammenfassende Darstellung findet sich bei Amos, Polym. Engng. Sci., 14 (1974), 1, S. 1 bis 11, sowie in den US-Patentschriften 2 694 692 und 2 862 906 auf die weiterer Einzelheiten verwiesen werden soll.

Unter Weichkomponente im Sinne dieser Erfindung wird der bei Raumtemperatur (25 °C in Toluol unlösliche Anteil des schlagzät modifizierten Polymerisats abzüglich etwaiger Pigmente verstanden. Die Weichkomponente entspricht also dem Gelanteil des Produktes.

Die Weichkomponente ist im allgemeinen heterogen aufgebaut ; sie bildet sich in der Regel im Laufe des Herstellprozesses aus und wird in der Menge und im Zerteilungsgrad durch die Verfahrensbedingungen beeinflußt. Die zu polymerisierende Lösung des Kautschuks in den monovinylaromatischen Monomeren trennt sich bekanntlich unmittelbar nach Einsetzen der Reaktion in zwei Phasen, von denen die eine, eine Lösung des Kautschuks im monomeren Vinylaromaten, zunächst die kohärente Phase bildet, während die zweite, eine Lösung des Polyvinylaromaten in seinem eigenen Monomeren, in ihr in Tröpfchen suspendiert bleibt. Mit steigendem Umsatz vermehrt sich die Menge der zweiten Phase auf Kosten der ersten und unter Verbrauch der Monomeren ; dabei tritt ein Wechsel der Phasenkohärenz auf. Bei diesem bilden sich Tropfen von Kautschuklösung in Polyvinylaromatlösung aus ; diese Tropfen halten aber ihrerseits kleinere Tropfen der jetzt äußeren Phase eingeschlossen.

Neben diesem Vorgant läuft eine Pfropfreaktion ab, bei der chemische Verknüpfungen zwischen den Kautschukmolekülen und den Polyvinylaromaten unter Bildung von Pfropf-Copolymeren aus beiden Bestandteilen gebildet werden. Dieser Vorgang ist bekannt und z. B. bei Fischer, Die angew. Makrom. Chem. 33 (1973), S. 35 bis 74, ausführlich dargestellt.

Sowohl der aufgepfropfte als auch der mechanisch eingeschlossene Anteil des Polyvinylaromaten in den Kautschukteilchen ist zur Weichkomponente zu rechnen.

Wenn die Masse ganz durchpolymerisiert ist, ist so eine in eine harte Matrix aus dem Polyvinylaromaten eingelagerte heterogene Weichkomponente entstanden, die aus gepfropften Kautschukteilchen mit Einschlüssen aus Matrixmaterial (Polyvinylaromat) besteht. Je größer die Menge des eingeschlossenen Matrix-Materials ist, um so größer ist bei konstantem Kautschukgehalt die Menge der Weichkomponente.

Diese richtet sich also nicht nur nach der Menge des eingesetzten Kautschuks, sondern auch nach der Prozeßführung besonders vor und während der Phaseninversion. Die Einzelmaßnahmen sind prozeßspezifisch und dem Fachmann bekannt (s. z. B. Freeguard, Brit. Polym. J. 6 (1974) S. 203 bis 228 ; Wagner, Robeson, Rubber Chem. Tech. 43 (1970), 1129 ff).

Um zu schlagzähen thermoplastichen Formmassen mit den erfindungsgemäßen Eigenschaftsmerkmalen zu gelangen, wird die Menge an Kautschuk, die vor der Polymerisation in den Monomeren unter Herstellung der Ausgangslösung gelöst wird, in Abhängigkeit von dem Endumsatz bei der Polymerisation so gewählt, daß der Weichkomponentengehalt im resultierenden schlagzäh modifizierten Polymerisat der monovinylaromatischen Verbindungen mindestens 20 Gew.-%, vorzugsweise 25 Gew.-% und mehr, bezogen auf das schlagzäh modifizierte Polymeriat, beträgt. Die Obergrenze des Weichkomponentengehaltes ist durch die Forderung, daß der Polyvinylaromat die kohärente Phase bilden muß, zu etwa 50 bis 60 Gew.-% gegeben. Für die erfindungsgemäßen thermoplastischen Formmassen hat sich dabei ein Weichkomponentengehalt von 25 bis 35 Gew.-%, bezogen auf das schlagzäh modifizierte Polymerisat, als besonders günstig erwiesen. Der Kautschuk-Anteil des schlagzäh modifizierten Polymerisats beträgt dann im allgemeinen zwischen 2 und 15 Gew.-%, vorzugsweise von 5 bis 12 Gew.-%.

Wie dargelegt und hinreichend bekannt, bestehen die schlagzäh modifizierten Polymerisate der monovinylaromatischen Verbindungen aus einer einheitlichen umhüllenden Phase (Matrix) aus dem Polymerisat der monovinylaromatischen Verbindung, in die als disperse Phase die Kautschukteilchen der Weichkomponente eingebettet sind, wobei die Kautschuk-Teilchen partiell vernetzt und in mehr oder weiniger starkem Maße während der Polymerisation durch die monovinylaromatischen Verbindungen gepfropft worden sind.

Die Bestimmung der mittleren Teilchengröße der dispersen Weichkomponente kann z. B. durch Auszählung und Auswertung elektronenmikroskopischer Dünnschichtaufnahmen der schlagzäh modifizierten Polymerisate erfolgen (vgl. F. Lenz, Zeitschrift für Wiss. Mikroskopie, 63 (1956), s. 50/56).

Die Einstellung der Teilchengröße der dispersen Weichkomponenten-Phase erfolgt dabei in an sich bekannter Weise bei der Polymerisation der monovinylaromatischen Verbindungen durch Anpassen der Rührgeschwindigkeit im ersten Abschnitt der Polymerisation, d. h. bis zu einem Umsatz der Monomeren von gleich oder kleiner als 45 %. Dabei ist die Teilchengröße der dispersen Weichkomponenten-Phase um so größer, je kleiner die Rührerdrehzahl und damit je kleiner die Scherbeanspruchung ist. Der Zusammenhang zwischen der Rührgeschwindigkeit und der Größe und Verteilung der Kautschukteilchen im resultierenden schlagzähen Polymerisat ist z. B. in der zitierten Arbeit von Freeguard beschrieben, auf welche hinsichtlich weiterer Einzelheiten verwiesen wird. Die betreffende notwendige Rührgeschwindigkeit zur Erzeilung der gewünschten Teilchengröße der dispersen Weichkomponenten-Phase hängt unter anderem von den jeweiligen Apparateverhältnissen ab und ist dem Fachmann bekannt bzw. läßt sich durch ein paar einfache Versuche bestimmen.

Die mittlere Teilchengröße (Gewichtsmittel) der dispersen Weichkomponenten-Phase wurde bestimmt durch Auszählen und Mitteln der zur gleichen Größenklasse (konst. Intervallbreite) gehörigen Teilchen aus elektronenmikroskopischen Dünnschichtaufnahmen. Mit den Volumina der Teilchen (3. Potenz des scheinbaren Durchmessers) innerhalb der Intervalle wird die Verteilungssummenkurve bestimmt. Beim 50 %-Ordinatwert kann auf der Abszisse der Äquivalentdurchmesser dann abgegriffen werden. Die angegebenen mittleren Durchmesser stellen dabei einen Mittelwert von mindestens 5 000 Teilchen dar.

Als Komponente B) kommen Polyether auf der Basis von in ortho-Position disubstituierten Polyphenylenoxiden in Frage, wobei der Ethersauerstoff der einen Einheit an den Benzolkern der benachbarten Einheit gebunden ist. Dabei sollen mindestens 50 Einheiten miteinander verknüpft sein. Die Polyether können in ortho-Stellung zum Sauerstoff Wasserstoff, Halogen, Kohlenwasserstoffe, die kein α-ständiges tertiäres Wasserstoffatom besitzen, Halogenkohlenwasserstoffe, Phenylreste und Kohlenwasserstoff-oxi-Reste tragen. So kommen in Frage: Poly(2,6-dichlor-1,4-phenylen)-ether, Poly(2,6-diphenyl-1,4-phenylen)ether, Poly(2,6-dimethoxy-1,4-phenylen)ether, Poly(2,6-dimethyl-1,4-phenylen)ether, Poly(2,6-dibrom-1,4-phenylen)ether. Bevorzugterweise wird der Poly(2,6-dimethyl-1,4-phenylen)ether eingesetzt. Besonders bevorzugt sind dabei Poly(2,6-dimethyl-1,4-phenylen)ether mit einer grenzviskosität von 0,40-0,65 dl/g (gemessen in Chloroform bei 30 °C).

Die Polyphenylenether können z. B. in Gegenwart von komplexbildenden Mittlen wie Kupferbromid und sek. Dibutylamin aus den Phenolen hergestellt werden.

Als Flammschutzzusatz, Komponente C), der erfindungsgemäßen Formassen kommen phosphorhaltige Verbindungen alleine und/oder halogenenthaltende Flammschutzmitteln in Betracht. Geeignet sind beispielsweise Verbindungen, in denen der Phophor die Oxidationsstufe + 1 besitzt, wie z. B. die Hypophosphite, wobei es sich bei den Kationen um Elemente der I., II., III. Hauptgruppe, der I. bis VIII. Nebengruppe des Periodischen Systems, um die Gruppe der Lanthaniden, um Germanium, Zinn, Blei, Antimon und Wistmut handeln kann. Unter Periodischem System der Elemente soll das System von Mendelejew verstanden werden, das in dem Lehrbuch « Anorganische Chemie » von F.A., Cotton, G. Wilkinson, Verlag Chemie (1967) wiedergegeben ist.

Des weiteren kommen Doppelphosphite mit der Struktur $CeMe(H_2PO_2)_6$ in Frage, wobei Me = Erbium, Thulium, Ytterbium und Lutetium sein kann. Es können auch kompßexe Hypophosphite verwendet werden, wie beispielsweise $Me[Zr(H_2PO_2)_6]$, $Me[Hf(H_2PO_2)_6]$, wobei Me = Magnesium, Calcium, Mangan, Cobalt, Nickel, Eisen, Zink und Cadmium sein kann.

Neben diesen anorganischen Hypophosphiten kommen auch organische Hypophosphite in Frage. Geeignet sind z. B. Cellulosehypophosphitester, Polyvinylalkoholhypophosphitester, Ester der hypophosphorigen Säure von Diolen, wie z. B. von 1,10-Dodecyldiol.

Ganz besonders geeignet ist Calciumhypophosphit.

Als Komponente C) kommen aber auch aromatische Phosphorverbindungen in Frage mit der allgemeinen Formel

$$\begin{array}{c} O \\ \| \\ R^1-P-R^3 \\ | \\ R^2 \end{array}$$

worin $R^1$, $R^2$ und $R^3$ gleich oder verschieden sein kann und Aryl, Alkyl, Cycloalkyl, alkylsubstituierter Aryl, halogensubstituierter Aryl, arylsubstituierter Alkyl, Halogen, Wasserstoff, die entsprechenden Aryloxi-, Alkyl- oxi-, Cycloalkyloxi-Reste und deren Kombinationen sind, wobei mindestens ein Rest ein Aryl- bzw. Aryloxi-Rest ist, wie beispielsweise Triphenylphosphinoxid, Phenylbisdodecylphosphat, Phenylbisneopentylphosphat, Phenylethylenhydrogenphosphat, Phenyl-bis(3,5,5'-trimethylhexylphosphat), Ethyldiphenylphosphat, 2-Ethyl-hexyldi(p-tolyl)-phosphat, Diphenylhydrogenphosphat, Bis(2-ethylhexyl)-p-tolylphosphat, Tritolylphosphat, Bis(2-ethylhexyl)-phenylphosphat, Tri-(nonylphenyl)phosphat, Phenylmethylhydrogenphosphat, Di(dodecyl)-p-tolylphosphat, Tricresylphosphat, Triphenylphosphat, Dibutylphenylphosphat, 2-Chlorethyldiphenylphosphat, p-Tolyl-bis(2,5,5'-trimethylhexyl)phosphat, 2-Ethylhexyldiphenylphosphat, Diphenylhydrogenphosphat.

Besonders geeignet sind Phosphorverbindungen, bei denen jedes R ein Aryloxi- bzw. Aryl-Rest ist. Ganz besonders ist dabei Triphenylphosphinoxid und Triphenylphosphat geeignet.

Des weiteren kann es sich bei der Komponente C) um cyclische Phosphate bzw. Phosphonate oder um einfache Phosphonate handeln, wie sie beispielsweise in den US-PS 3 090 799 und 3 141 032 beschrieben sind.

Als besonders geeignet erweisen sich dabei das Diphenylpentaerythritol-diphosphat und das Diphenylphenylphosphonat.

Die Komponente C) kann des weiteren noch ein übliches halogenhaltiges Flammschutzmittel sein. In Frage kommen dabei Halogen enthaltende organische Verbindungen, wie sie z. B. in der Monographie von H. Vogel « Flammfestmachen von Kunststoff », Hüthing-Verlag, 1966, auf den Seiten 94 bis 102 beschrieben sind. Es kann sich dabei aber auch um halogenierte Polymere, wie z. B. halogeniertes Polyphenylenoxid oder bromierte Oligo- bzw. Polystyrole, handeln. Die Verbindungen sollen mehr als 30 Gew.-% halogenen enthalten, vorzugsweise mehr als 40 Gew.-% Chlor bzw. mehr als 50 Gew.-% Brom. Besonders gut geeignete Flammschutzmittel sind Hexabromcyclododecan, Octabromhexadecan, Bis-(tribromphenoxi)-ethan, chloriertes Paraffin mit etwa 70 Gewichtsteilen Chlor, halogenhaltige Diels-Alder-Addukte, halogenhaltige Diphenyle, wie sie in der DE-OS 23 28 517, in der US-PS 3 894 988 bzw. 3 892 710 beschrieben sind, sowie bromiertes Oligostyrol nach US-PS 4 143 221.

Im Falle des Einsatzes der halogenhaltigen Flammschutzmittel empfieht es sich, einen Synergisten zu verwenden, wie Verbindungen des Antimons, wie $Sb_2O_3$, $SbCl_3$, $SbJ_3$, SbOCl, des Arsens, wie $As_2O_3$ und $As_2O_5$, des Bors, wie $ZnBO_4$, $BaB_2O_4 \cdot H_2O$, $2 \cdot ZnO \cdot 3B_2O_3 \cdot 3{,}5H_2O$ des Zinns, wie Zinn-II-oxidhydrat und $SnO_2$. Diese Synergisten werden im allgemeinen in Mengen von 0,5 bis 10 Gew.-%, bezogen auf die thermoplastische Formasse, eingesetzt.

Die Mischungen können als Komponente D) weitere Zusatzstoffe, wie Pigmente, Füllstoffe, Oligo- und Polymere, Antistatika, Antioxidantien und Schmiermittel enthalten.

Neben dem Begriff « Oxidationsstufe » können noch andere Begriffe, wie Oxidationszahl, Ladungszahl und ähnliche verstanden werden, wie sie in dem Lehrbuch der anorganischen Chemie von A. F. Hollemann, E. Wiberg, Walter de Gruyter u. Co. (1964, 57-70. Auflage), S. 166 bis 177, wiedergegeben sind.

Man stellt die erfindungsgemäßen thermoplastischen Formmassen wie üblich auf Vorrichtungen, die ein homogenes Mischen zulassen, wie Knetern, Extrudern oder Walzenmischgeräten her.

Neben der Eigenschaft der Selbstverlöschung besitzen Formteile aus den erfindungsgemäßen Formmassen eine homogen matte Oberfläche.

Die erfindungsgemäßen Massen lassen sich nach den für die Thermoplastverarbeitung üblichen Verfahren, wie z. B. Extrusion und Spirtzgießen, zu den verschiedenartigsten Formkörpern, wie z. B. zu Rückwänden von Fernsehern und zu Formteilen im Automobilbereich verarbeiten.

Die Erfindung wird durch die nachfolgenden Beispiele näher erläutert. Die in den Beispielen genannten Teile und Prozente beziehen sich, sofern nicht anders angegeben, auf das Gewicht.

Die Flammschutzprüfung erfolgt im vertikalen Brandtest nach den Vorschriften der Underwriter Laboratories zwecks Einordnung in eine der Brandklassen 94 VE-O, 94 VE-1 oder 94 VE-2. Zur Prüfung der homogenen Mattigkeit der Obfläche an den Formteilen wurden auf einer Spritzgußmaschine bei 200 und 300 °C Spritztemperatur und einer Formtemperatur von 30 °C Testkästchen, wie sie von E. Zahn und K. Wiebusch in Kunststoffe, Heft 11, 1966, S. 6 beschrieben sind, hergestellt. An diesen Formteilen wurde visuell beurteilt, ob sie eine homogen matte Oberfläche besitzen.

## Beispiele und Vergleichsversuche

Ein schlagzähes Polystyrol mit einer mittleren Teilchengröße $\leq 0{,}5\ \mu$ wird mit folgender Rezeptur erhalten :

In einem 5 1-Rührkessel mit Blattrührer wurde eine Lösung bestehend aus

1 560 g Styrol
240 g Bu/S-Blockcopolymerisat mit verschmiertem Übergang zwischen den Blöcken : [η] = 1,74 [dl/g] (Toluol 25°) ; Blockpolystyrol = 31,0 % ; [η] = 0,364 [dl/g] (Toluol 25°) ; Gesamtstyrolgehalt = 41,6 %
1,6 g t-Dodecylmercaptan
2,2 g Octadecyl-3(3',5'-ditert.-butyl-4-hydroxiphenyl)-propionat
1,7 g Dicumylperoxid

bei 110 °C Innentemperatur und einer Rührerdrehzahl von 150 Upm bis zu einem Feststoffgehalt von 43,8 Gew.-% vorpolymerisiert.

Anschließend wurden 1 800 ml Wasser, die 9,0 g Polyvinylpyrrolidon von K-Wert 90 und 1,8 g $Na_4P_2O_7$ enthielten, zugesetzt und die Rührerdrehzahl auf 300 Upm erhöht. Durch Nachpolymerisation von 5 Stunden bei 120 °C und 5 Stunden bei 140 °C wurde bis zu einem Styrolumsatz 99 % auspolymerisiert.

Ein schlagzähes Polystyrol mit einer mittleren Teilchengröße von ca. 1 µm wird nach folgender Rezeptur hergestellt :

In einer 2-Kessel-2-Turmkaskade wurde eine Mischung von 7,2 Gewichtsteilen eines Polybutadiens mit einem cis-Anteil von 98 %, zusammen mit 85,7 Gewichtsteilen Styrol, 6 Gewichtsteilen Ethylbenzol und 0,1 Teilen Octadecyl-3-(3',5'-ditert.-butyl-4'-hydroxiphenyl)-propionat thermisch polymeriserit. Der Durchsatz betrug 4 1/Stunde. Die in den einzelnen Reaktoren angewendeten Rührgeschwindigkeiten, Temperaturen sowie die eingestellten intetralen Umsätze sind unten aufgeführt. In den dritten Reaktor wurden dem Polymerstrom 0,02 Gew.-% tert.-Dodecylmercaptan, bezogen auf Styrol, kontinuierlich zudosiert. Die Polymerisatmischung wurde nach der Polymerisation in einer Entgasungszone bei 220 bis 240 °C vom Lösungsmittel und Restmonomeren befreit.

| Ort | Rührgeschwindigkeit [Upm] | Temp. [°C] | Umsatz (Integral) |
|---|---|---|---|
| 1. Rührreaktor | 100 | 104 | 3,8 |
| 2. Rührreaktor | 160 | 132 | 20,3 |
| 1. Turm | 15 | 101 | 55,3 |
| 2. Turm | 3 | 127 | 84,3 |
| Entgasung | — | 250 | — |

Nach folgender Vorschfrift wird ein schlagzähes Polystyrol mit einer mittleren Teilchengröße von 6 µm hergestellt.

In einem 4 1-Rührkessel mit Blattrührer wurde eine Lösung bestehend aus

1 283 g Styrol
112 g Polybutadien (1,2-Vinylgehalt ca. 9 Gew.-%)
1,5 g t-Dodecylmercaptan
1,5 g Octadecyl-3(3',5'-di-tert.-butyl-4'-hydroxiphenyl)-propionat
1,5 g Dicumylperoxid

bei 110 °C Innentemperatur und einer Rührerdrehzahl von 150 Upm bis zu einem Feststoffgehalt von 25,4 Gew.-% vorpolymerisiert. Anschließend wurden 1 800 ml Wasser, die 9 g Polyvinylpyrrolidon von K-Wert 90 und 1,8 g $Na_4P_2O_7$ enthielten, zugesetzt und die Rührerdrehzahl auf 300 Upm erhöht. Durch Nachpolymerisation von 3 Stunden bei 110 °C, 3 Stunden bei 120 °C und 4 Stunden bei 140 °C wurde bis zu einem Styrolumsatz $>$ 99 % auspolymerisiert.

Durch Mischen der beschriebenen schlagfesten Polystyrole erhält man die erfindungsgemäßen Zusammensetzungen.

Die in der Tabelle angegenen Gewichtsteile an schlagzäh modifiziertem Polystyrol (Komponente A), Poly(2,6-dimethyl-1,4-phenylen)ether (Komponente B) und an Flammschutzzusatz (Komponente C) werden auf einem Zweiwellenextruder bei 280 °C aufgeschmolzen, homogenisiert, gemischt und granuliert. Der Poly(2,6-dimethyl-1,4-phenylen)ether hatte eine Grenzviskosität von 0,48 dl/g (gemessen in Chloroform bei 30 °C).

(Siehe Tabelle Seite 7 f.)

Tabelle

| Beispiel (erfindungsgemäß) | Komponente A [Gew.Teile] | Komponente A mittlere Teilchengröße [Gew.Teile] ≤ 1,5 µm | Komponente A mittlere Teilchengröße [Gew.Teile] > 3 µm | Komponente B Poly-(2,6-dimethyl-1,4-phenylen(ether) [Gew.Teile] | Komponente C Flammschutzzusatz Art | Komponente C Flammschutzzusatz [Gew.Teile] | Brandklasse nach UL-94 | Oberflächenbild Mattigkeit 280 °C | Oberflächenbild Mattigkeit 300 °C |
|---|---|---|---|---|---|---|---|---|---|
| 1 | 70 | 90 | 10 | 30 | Calciumhypophosphit | 6 | VE-1 | homogen | homogen |
| 2 | 60 | 90 | 10 | 40 | Calciumhypophosphit | 4 | VE-1 | homogen | homogen |
| 3 | 50 | 90 | 10 | 50 | Calciumhypophosphit | 7 | VE-0 | homogen | homogen |
| 4 | 60 | 90 | 10 | 40 | Triphenylphosphit | 5 | VE-1 | homogen | homogen |
| 5 | 50 | 90 | 10 | 50 | Triphenylphosphit | 10 | VE-0 | homogen | homogen |
| 6 | 60 | 80 | 20 | 40 | Dimethylpentaerythritoldiphosphonat | 2,5 | VE-1 | homogen | homogen |
| 7 | 50 | 90 | 10 | 50 | Triphenylphosphinoxid | 8 | VE-0 | homogen | homogen |
| 8 | 50 | 80 | 20 | 50 | Triphenylphosphinoxid | 8 | VE-0 | homogen | homogen |
| 9 | 50 | 60 | 40 | 50 | Triphenylphosphinoxid | 8 | VE-0 | homogen | homogen |
| 10 | 50 | 50 | 50 | 50 | Triphenylphosphat | 10 | VE-0 | homogen | homogen |

Tabelle (Fortsetzung)

| Vergleichsversuche (nicht erfindungsgemäß) | Komponente A [Gew.Teile] | Komponente A mittlere Teilchengröße [Gew.Teile] ≤ 1,5 µm | > 3 µm | Komponente B Poly-(2,6-dimethyl-1,4-phenylen(ether) [Gew.Teile] | Komponente C Flammschutzzusatz Art | [Gew.Teile] | Brandklasse nach UL-94 | Oberflächenbild Mattigkeit 280 °C | 300 °C |
|---|---|---|---|---|---|---|---|---|---|
| A | 70 | 100 | 0 | 30 | Calciumhypophosphit | 6 | VE-1 | inhomogen | inhomogen |
| B | 60 | 100 | 0 | 40 | Calciumhypophosphit | 4 | VE-1 | inhomogen | inhomogen |
| C | 50 | 100 | 0 | 50 | Calciumhypophosphit | 7 | VE-0 | inhomogen | inhomogen |
| D | 60 | 100 | 0 | 40 | Triphenylphosphat | 5 | VE-1 | inhomogen | inhomogen |
| E | 50 | 100 | 0 | 50 | Triphenylphosphat | 10 | VE-0 | inhomogen | inhomogen |
| F | 60 | 100 | 0 | 40 | Dimethylpentaerythritol disphosphonat | 2,5 | VE-1 | inhomogen | inhomogen |
| G | 50 | 5 | 95 | 50 | Triphenylphosphat | 10 | VE-0 | inhomogen | inhomogen |

**Anspruch**

Selbstverlöschende thermoplastische Formassen, enthaltend

A) 70 bis 10 Gewichtsteile eines schlagzäh modifizierten Polymerisates einer vinylaromatischen Verbindung,
B) 30 bis 90 Gewichtsteile eines Polyphenylenethers,
C) 1 bis 20 Gewichtsteile eines Flammschutzzusatzes, sowie
D) — gegebenenfalls — übliche Zusatzstoffe in wirksamen Mengen,

dadurch gekennzeichnet, daß das schlagzäh modifizerte Polymerisat der vinylaromatischen Verbindung (A) einen Weichkomponentengehalt von 20 bis 60 Gew.-% hat und 98 bis 10 Gew.-% der Weichkomponente eine mittlere Teilchengröße von ≤ 1,5 μm und 2 bis 90 Gew.-% eine mittlere Teilchengröße von > 3 μm aufweisen.

**Claim**

Self-extinguishing thermoplastic molding materials containing

A) from 70 to 10 parts by weight of a vinylaromatic polymer which has been made impact-resistant,
B) from 30 to 90 parts by weight of a polyphenylene ether, and
C) from 1 to 20 parts by weight of a flameproofing additive, with or without
D) conventional additives in effective amounts,

wherein the vinylaromatic polymer (A) which has been made impact-resistant contains from 20 to 60 % by weight of soft component, and from 98 to 10 % by weight of the soft component have a mean particle size of ≤ 1.5 μm, and from 2 to 90 % by weight have a mean particle size of > 3 μm.

**Revendication**

Matières à mouler thermoplastiques auto-extinguibles, contituées de

A) 70 à 10 parties en poids d'un polymérisat d'un composé aromatique vinylique, modifié pour être résistant aux chocs
B) 30 à 90 parties en poids d'un poly(éther de phnéylène)
C) 1 à 20 parties en poids d'un additif ignifugeant et contenant éventuellement
D) des additifs usuels en des proportions efficaces,

caractérisées en ce que le polymérisat du composé aromatique vinylique (A), modifié pour être résistant aux chocs, contient entre 20 et 60 % en poids d'une composante molle et cette composante molle est constituée à raison de 98 à 10 % en poids de particules d'une granulométrie moyenne inférieure ou égale à 1,5 μm et à raison de 2 à 90 % en poids de particules avec une granulométrie moyenne supérieue à 3 μm.